# EUROPÄISCHE PATENTANMELDUNG

(11) **EP 3 267 657 A1**
(43) Veröffentlichungstag der Anmeldung: **10.01.2018**
(21) Anmeldenummer: 16178191.9
(22) Anmeldetag: 06.07.2016
(51) Int. Cl.: H04L 29/08

(54) **NETZWERKSYSTEM, CLOUD-ANSCHLUSS UND VERFAHREN ZUR IDENTIFIKATION VON NETZWERKGERÄTEN**

(71) Anmelder: Siemens Aktiengesellschaft, 80333 München (DE)
(72) Erfinder: Woronka, Stefan, 38271 Baddeckenstedt (DE)

(57) **Zusammenfassung**

Die Erfindung betrifft ein Netzwerksystem umfassend
einem ersten Netzwerkteilnehmer mit mehreren Netzwerkgeräten (2), wobei die Netzwerkgeräte (2) zur Identifikation Identifikationsparameter aufweisen,
einem zweiten Netzwerkteilnehmer mit einer Cloud-Computing-Infrastruktur,
sowie einem Cloud Connector (1) mit einer ersten Schnittstelle und einer zweiten Schnittstelle,
wobei der Cloud Connector (1) mittels der ersten Schnittstelle mit dem ersten Netzwerkteilnehmer in Verbindung steht und mittels der zweiten Schnittstelle mit dem zweiten Netzwerkteilnehmer in Verbindung steht,
wobei der Cloud Connector (1) eingerichtet und ausgebildet ist, in einem ersten Schritt einen passiven Scan und einen aktiven Scan des ersten Netzwerkteilnehmers durchzuführen, so dass eine Identifikation von zumindest einem Netzwerkgerätes (2) durch den Cloud Connector (1) bewerkstelligbar ist.

## Beschreibung

Die Erfindung betrifft ein Netzwerksystem, umfassend einem ersten Netzwerkteilnehmer mit mehreren Netzwerkgeräten, wobei die Netzwerkgeräte zur Identifikation Identifikationsparameter aufweisen, einem zweiten Netzwerkteilnehmer mit einer Cloud-Computing-Infrastruktur, sowie einem Cloud Connector mit einer ersten Schnittstelle und einer zweiten Schnittstelle, wobei der Cloud Connector mittels der ersten Schnittstelle mit dem ersten Netzwerkteilnehmer in Verbindung steht und mittels der zweiten Schnittstelle mit dem zweiten Netzwerkteilnehmer in Verbindung steht. Zudem betrifft die Erfindung einen Cloud Connector und ein Verfahren zur Identifikation von Netzwerkgeräten.

In Automatisierungsanlagen werden vielfach Feldgeräte eingesetzt, die zur Erfassung und/oder Beeinflussung von Prozessgrößen dienen. Zur Erfassung von Prozessgrößen dienen Messgeräte, wie beispielsweise Füllstandsmessgeräte, Durchflussmessgeräte, Druck- und Temperaturmessgeräte, pH-Messgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Zur Beeinflussung der Prozessgrößen werden Aktoren verwendet, wie Ventile oder Pumpen, über die z.B. der Durchfluss einer Flüssigkeit in einer Rohrleitung oder der Füllstand eines Mediums in einem Behälter geändert wird. Unter dem in Verbindung mit der Erfindung verwendeten Begriff 'Feldgerät' sind alle Typen von Messgeräten und Aktoren zu subsumieren. Als Feldgeräte werden darüber hinaus in Zusammenhang mit der Erfindung auch alle Geräte bezeichnet, die prozessnah eingesetzt werden und die prozessrelevante Informationen liefern oder verarbeiten. Neben den zuvor genannten Messgeräten/Sensoren und Aktoren werden als Feldgeräte allgemein auch solche Einheiten bezeichnet, die direkt an einem Feldbus angeschlossen sind und zur Kommunikation mit der übergeordneten Einheit dienen, wie z.B. Remote I/Os, Gateways, Linking Devices und Wireless Adapter bzw. Funkadapter, PLC etc.. Üblicherweise sind auf der Feldebene je nach Größe der Anlage mehrere Steuerungen PLC A, PLC B angeordnet. Die Kommunikation zwischen den Steuerungen PLC A, PLC B und den an vorhergehender Stelle bereits näher definierten prozessnahen Feldgeräten A, S, die an eine der Steuerungen PLC A, PLC B angekoppelt sind, erfolgt über zumindest einen der in der Automatisierungstechnik gebräuchlichen Feldbus. Auf der Steuerungsebene liefern die Steuerungen PLC A, PLC B ihre von den Feldgeräten A, S gesammelten Daten und / oder weiterverarbeiteten Messwerte an eine übergeordnete Steuereinheit, z.B. eine SCADA. Die Feldgeräte sind netzwerkfähig ausgestaltet und über ein Netzwerk miteinander verbunden. Jedem Feldgerät ist eine eindeutige Adresse in dem Netzwerk zugeordnet. Dabei erfolgt die Kommunikation über ein definiertes Netzwerkprotokoll.

Wenn Automatisierungsanlagen oder Automatisierungszellen an eine Cloud basierte Infrastruktur angeschlossen werden, dann müssen anzuschließende Geräte zuerst ermittelt, dann die zur Verfügung stehenden Geräteparameter erkannt und kategorisiert und diese dann im Anschluss an die Cloud und den lokalen Cloud Connector weitergegeben werden.

Ein Connector spielt überall dort eine Rolle, wo ein Bindeglied oder eine Schnittstelle benötigt wird. Der Cloud Connector dient hier als Bindeglied zwischen einer Cloudbasierten Application und der Automatisierungsanlage. Dabei kann der Cloud Connector als Agent in einem Netzwerk ausgestalten sein, z.B. als reverse invoke proxy. Während ein typischer Proxy dafür verwendet werden kann, mehreren Clients eines internen Netzes den Zugriff auf ein externes Netz zu gewähren, funktioniert ein Reverse Proxy genau andersherum.

Nachdem der Cloud Connector in eine Automatisierungsanlage oder Automatisierungszelle eingebracht wurde, müssen die anzuschließenden Geräte bisher manuell ergänzt werden. Das bedeutet, dass die notwendigen Merkmale zu einem Gerät zuerst ermittelt und dann eingegeben werden müssen.

Diese Ermittlung erfolgt zur Zeit manuell und muss dann manuell in den Cloud Connector eingegeben werden. Ggf. müssen die Dateneingaben dann zentral (in der Cloud) erneut wiederholt werden.

Es ist daher eine erste Aufgabe der Erfindung ein vereinfachtes System für eine Anbindung einer Automatisierungsanlage an eine Cloud anzugeben. Eine zweite Aufgabe liegt in der Angabe eines Cloud Connectors für ein solches System. Eine dritte Aufgabe liegt in der Angabe eines Verfahrens für ein solches System.

Die auf das System bezogene Aufgabe wird gelöst durch die Angabe eines Netzwerksystems umfassend
einem ersten Netzwerkteilnehmer mit mehreren Netzwerkgeräten, wobei die Netzwerkgeräte zur Identifikation Identifikationsparameter aufweisen,
einem zweiten Netzwerkteilnehmer mit einer Cloud-Computing-Infrastruktur,
sowie einem Cloud Connector mit einer ersten Schnittstelle und einer zweiten Schnittstelle,
wobei der Cloud Connector mittels der ersten Schnittstelle mit dem ersten Netzwerkteilnehmer in Verbindung steht und mittels der zweiten Schnittstelle mit dem zweiten Netzwerkteilnehmer in Verbindung steht,
und wobei der Cloud Connector eingerichtet und ausgebildet ist, in einem ersten Schritt einen passiven Scan und einen aktiven Scan des ersten Netzwerkteilnehmers durchzuführen, so dass eine Identifikation von zumindest einem Netzwerkgerät durch den Cloud Connector bewerkstelligbar ist.

Die auf den Cloud Connector bezogene Aufgabe wird gelöst durch die Angabe eines Cloud Connectors für ein Netzwerksystem, welche eine erste Schnittstelle und eine zweite Schnittstelle aufweist, wobei der Cloud Connector mittels der ersten Schnittstelle mit einem ersten Netzwerkteilnehmer mit mehreren Netzwerkgeräten verbindbar ist, wobei die Netzwerkgeräte zur Identifikation Identifikationsparameter aufweisen, und mittels der zweiten Schnittstelle mit einem zweiten Netzwerkteilnehmer mit einer Cloud-Computing-Infrastruktur verbindbar ist,
und wobei der Cloud Connector eingerichtet und ausgebildet ist, in einem ersten Schritt einen passiven Scan und einen aktiven Scan des ersten Netzwerkteilnehmers durchzuführen, so dass eine Identifikation von zumindest einem Netzwerkgerät durch den Cloud Connector bewerkstelligbar ist.

Die auf das Verfahren bezogene Aufgabe wird gelöst durch die Angabe eines Verfahrens zum Betreiben eines Netzwerksystems, welches einen ersten Netzwerkteilnehmer mit mehreren Netzwerkgeräten, wobei die Netzwerkgeräte zur Identifikation Identifikationsparameter aufweisen, und einen zweiten Netzwerkteilnehmer mit einer Cloud-Computing-Infrastruktur, aufweist, umfassend die Schritte:
- Bereitstellen eines Cloud Connectors, welcher eine erste Schnittstelle und eine zweite Schnittstelle aufweist,
- Verbinden der ersten Schnittstelle mit dem ersten Netzwerkteilnehmer und der zweiten Schnittstelle mit dem zweiten Netzwerkteilnehmer,
- Durchführen eines passiven Scans und einen aktiven Scans des ersten Netzwerkteilnehmers durch den Cloud Connector,
- Durchführen einer Identifikation von zumindest einem Netzwerkgerät durch den Cloud Connector.

Unter dem zweiten Netzwerkteilnehmer mit Cloud-Computing-Infrastruktur wird nachfolgend eine Cloud verstanden und auch so nachfolgend beschrieben. Cloud Computing beinhaltet Technologien und Geschäftsmodelle um IT-Ressourcen, Applikationen und Services dynamisch zur Verfügung zu stellen. Beim National Institute of Standards and Technology (NIST) wird beispielsweise eine Definition einer "Cloud" gegeben.

Es ist bekannt, dass die notwendigen und benötigten Merkmale zu einem Netzwerkgerät zuerst ermittelt und dann in den Cloud Connector eingegeben werden müssen, d.h. die manuelle Erfassung und Eingabe aller anzuschließenden Geräte.

Es wurde erkannt, dass diese manuelle Ermittlung häufig fehlerbehaftet und dann bei der Umsetzung sowohl lokal als auch zentral mit erheblichen Klärungsaufwand verbunden ist. Dies wird durch die Erfindung nun vermieden.

Die Vorteile der Erfindung liegen in mehrere Dimensionen. Die Fehlerhäufigkeit wird reduziert, indem die Geräte elektronisch identifiziert werden und die angebotenen Services direkt nachgeladen werden können. Die Profile bzw. Identifikationsparameter für gleichartige Geräte werden zentral vorgehalten und können so bei neuen Geräteklassen zentral erstellt und gepflegt werden. Weiterhin werden die Kosten für die Erkennung reduziert. Zudem kann eine große Anzahl an Geräten in kurzer Zeit erkannt werden.

Die Erfindung bewirkt eine zentrale und zügige Erkennung der an die Cloud Lösung angeschlossenen Komponenten sowie eine deutliche Reduzierung der lokalen Anschlussaufwendungen.

In den Unteransprüchen sind weitere vorteilhafte Maßnahmen aufgelistet, die beliebig miteinander kombiniert werden können, um weitere Vorteile zu erzielen.

Bevorzugt werden in einem zweiten Schritt die Netzwerkgeräteprofile, d.h. die Identifikationsparameter der identifizierten Netzwerkgeräte durch den Cloud Connector erstellt und den einzelnen Netzwerkgeräten zugeordnet. Weiterhin sind zumindest einzelne Netzwerkprofile aus dem zweiten Netzwerkteilnehmer in den Cloud Connector ladbar. Alternativ oder zusätzlich sind zumindest einzelne Netzwerkprofile vorab in dem Cloud Connector gespeichert vorhanden.

D.h., in einem zweiten Schritt lädt der Cloud Connector dann entsprechende Profile (je nach erkanntem Gerät), d.h. die Identifikationsparameter aus der Cloud nach oder hat sie schon vorab mitbekommen, um ein genaueres, rückwirkungsfreies Profiling der identifizierten Geräte durchzuführen.

Bevorzugt werden im Cloud Connector die Identifikationsparameter gespeichert.

In einem bevorzugten Ausführungsbeispiel empfängt bei dem passiven Scan der Cloud Connector Übertragungen, die von den mehreren Netzwerkgeräten initiiert sind. D.h. der Cloud Connector führt im ersten Schritt einen passiven Scan des ersten Netzwerkteilnehmers durch. Bei einem aktiven Scan des Cloud Connectors werden die Netzwerkgeräte aktiv angesprochen. Der Scan erfolgt, um die vorhandenen Geräte im Groben zu erkennen und so, dass die erkannten Geräte nicht in ihrer Tätigkeit beeinflusst werden.

Bevorzugt weist als Identifikationsparameter jedes Netzwerkgerät eine eindeutige Adresse in dem ersten Netzwerkteilnehmer und andere netzwerkgerätebezogene Daten auf. Andere Identifikationsparameter sind beispielsweise Gerätetyp und/oder Hardwarestand und/oder Softwarestand und/oder Firmwarestand und/oder den angebotenen Service.

In einem bevorzugten Ausführungsbeispiel ist der Cloud Connector in den ersten Netzwerkteilnehmer einbringbar. Der erste Netzwerkteilnehmer kann dabei insbesondere als eine Automatisierungsanlage mit einem Automatisierungsnetzwerk ausgestaltet sein.

Bevorzugt sind in dem Cloud Connector eine Identifizierungsinformation des Cloud Connector und eine Identifizierungsinformation des zweiten Netzwerkteilnehmers hinterlegt. Insbesondere sind diesbezüglich in einem Speicherbereich des Cloud Connectors eine sogenannte ID (engl. für user identifier, unit identifier oder unique identifier) des Cloud Connector, zum Beispiel deren MAC-Adresse (engl.: media access control), und eine ID des zweiten Netzwerkteilnehmers, zum Beispiel die MAC-Adresse oder z.B. die IP-Adresse hinterlegt bzw. gespeichert. Der Cloud Connector ist bereits vorkonfiguriert für eine Verbindung mit einer Cloud. Der Anbieter einer solchen Cloud kann so einen Cloud Connector anbieten, die für seine Cloud-Computing-Infrastruktur vorkonfiguriert sind, und den Installationsaufwand für Feldgeräte an die Cloud verringern bzw. vereinfachen.

Bevorzugt nimmt der Cloud Connector ein Anbindung des ersten Netzwerkteilnehmers an den zweiten Netzwerkteilnehmer von, d.h. er dient zur vereinfachten Anbindung der z.B. Automatisierungsanlage mit dem Automatisierungsnetzwerk an die Cloud.

Dabei findet der erfindungsgemäße Cloud Connector, insbesondre in dem erfindungsgemäßen Netzwerksystem oder in dem Verfahren Verwendung. Ebenso lässt sich das Verfahren auf dem erfindungsgemäßen Netzwerksystem durchführen.

Weitere Merkmale, Eigenschaften und Vorteile der vorliegenden Erfindung ergeben sich aus der nachfolgenden Beschreibung unter Bezugnahme auf die beiliegende Figuren. Darin zeigen schematisch:
FIG 1: ein Beispiel eines erfindungsgemäßen Netzwerksystems,
FIG 2: ein Ausführungsbeispiel eines erfindungsgemäßen Netzwerksystems.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

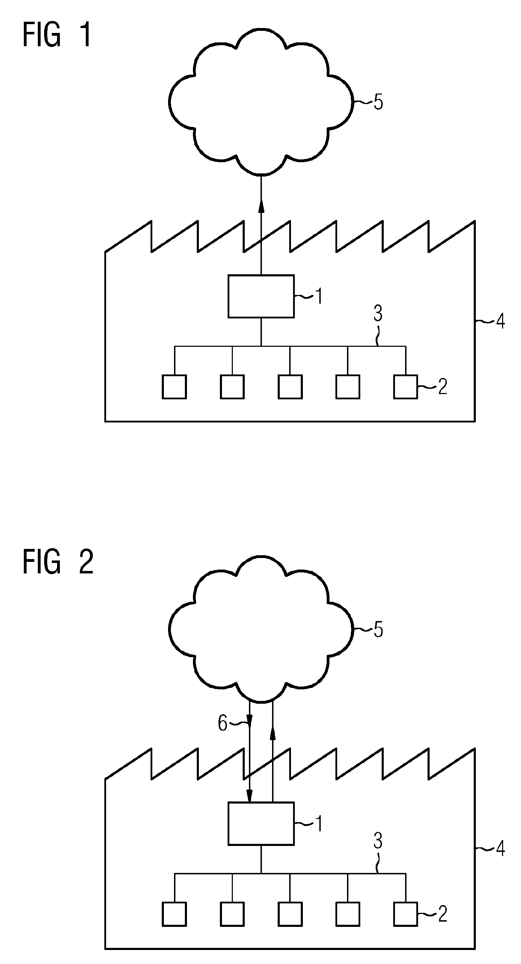

FIG 1 zeigt einen Cloud Connector 1. Dieser wird zur Anbindung der Automatisierungsanlage 4 an eine Cloud 5 in einem Automatisierungsnetzwerk 3 der Automatisierungsanlage 4 angeschlossen. Dabei kann der Cloud Connector 1 auch direkt im Automatisierungsnetzwerk 3 als z.B. Softwareagent installiert werden. Das Automatisierungsnetzwerk 3 weist Netzwerkgeräte 2 auf. Wenn der Cloud Connector 1 in eine Automatisierungsanlage 4 verbracht wird, so bekommt er die notwendigen Informationen, um sich im Netzwerk umzusehen. Dies sind z.B. eine eigene IP-Adresse, eine Verbindung in die Cloud (Routing) etc..

In einem ersten Schritt führt der Cloud Connector 1 dann einen Scan des Automatisierungsnetzwerk 3 mit den Netzwerkgeräten 2 durch. Dazu wird zunächst ein erster passiver Scan, dann ein gezielter aktiver Scan durchgeführt, um die vorhandenen Netzwerkgeräte 2 im Groben erkennen zu können. Die Scans erfolgen so, dass die erkannten Netzwerkgeräte 2 nicht in ihrer Tätigkeit beeinflusst werden. Dabei versteht man unter einem passiver Scan quasi das "Mitlauschen" am Automatisierungsnetzwerk 3. Hier gehen die Initiative von den Netzwerkgeräte 2 aus, d.h. es findet keine direkte Interaktion mit den Netzwerkgeräten 2 statt. Ein aktiver Scan beschreibt das aktive Ansprechen von Netzwerkgeräten 2. Dabei findet ein Rückfluss von Identifikationsparametern zur Identifizierung der Netzwerkgeräte 2 statt. D.h., zunächst wird zuerst der passive Scan, anschließend der aktive Scan durchgeführt.

FIG 2 zeigt einen zweiten Schritt, indem der Cloud Connector 1 dann entsprechende Profile, d.h. Identifikationsparameter, je nach erkanntem Netzwerkgerät 2 aus der Cloud 5 nachlädt (Pfeil 6). Alternativ oder zusätzlich hat der Cloud Connector 1 sie schon vorab mitbekommen, d.h. bei Einbringen in das Automatisierungsnetzwerk 3 installiert. Diese werden nun zugeordnet. Somit kann ein genaueres, rückwirkungsfreies Profil (d.h. alle notwendigen Identifizierungsparameter zu den Netzwerkgeräte 2 zuordnen) der identifizierten Netzwerkgeräte 2 durchgeführt werden.

Durch eine elektronische Identifikation der Netzwerkgeräte 2 wird die Fehlerhäufigkeit reduziert. Auch können z.B. Kosten eingespart werden, wenn die angebotenen Services direkt nachgeladen werden können. Die Profile für gleichartige Netzwerkgeräte 2 werden zentral vorgehalten und können so bei neuen Geräteklassen zentral erstellt und gepflegt werden.

## Patentansprüche

1. Netzwerksystem umfassend
einem ersten Netzwerkteilnehmer mit mehreren Netzwerkgeräten (2), wobei die Netzwerkgeräte (2) zur Identifikation Identifikationsparameter aufweisen,
einem zweiten Netzwerkteilnehmer mit einer Cloud-Computing-Infrastruktur,
sowie einem Cloud Connector (1) mit einer ersten Schnittstelle und einer zweiten Schnittstelle,
wobei der Cloud Connector (1) mittels der ersten Schnittstelle mit dem ersten Netzwerkteilnehmer in Verbindung steht und mittels der zweiten Schnittstelle mit dem zweiten Netzwerkteilnehmer in Verbindung steht,
**dadurch gekennzeichnet, dass** der Cloud Connector (1) eingerichtet und ausgebildet ist, in einem ersten Schritt einen passiven Scan und einen aktiven Scan des ersten Netzwerkteilnehmers durchzuführen, so dass eine Identifikation von zumindest einem Netzwerkgerät (2) durch den Cloud Connector (1) bewerkstelligbar ist.

2. Netzwerksystem nach Anspruch 1,
**dadurch gekennzeichnet, dass** in einem zweiten Schritt die Identifikationsparameter der identifizierten Netzwerkgeräte (2) durch den Cloud Connector (1) erstellbar und den einzelnen Netzwerkgeräten (2) zuordenbar sind.

3. Netzwerksystem nach Anspruch 2,
**dadurch gekennzeichnet, dass** zumindest einzelne Identifikationsparameter aus dem zweiten Netzwerkteilnehmer in den Cloud Connector (1) ladbar sind.

4. Netzwerksystem nach Anspruch 2 oder 3,
**dadurch gekennzeichnet, dass** zumindest einzelne Identifikationsparameter vorab in dem Cloud Connector (1) gespeichert vorhanden sind.

5. Netzwerksystem einem der vorhergehenden Ansprüche 1-4,
**dadurch gekennzeichnet, dass** der Cloud Connector (1) die Identifikationsparameter speichert.

6. Netzwerksystem einem der vorhergehenden Ansprüche 1-5,
**dadurch gekennzeichnet, dass** bei dem passiven Scan der Cloud Connector (1) Übertragungen empfängt, die von zumindest einem Netzwerkgerät (2) initiiert sind.

7. Netzwerksystem einem der vorhergehenden Ansprüche 1-6,
**dadurch gekennzeichnet, dass** bei einem aktiven Scan der Cloud Connector (1) die Netzwerkgeräte (2) aktiv anspricht.

8. Netzwerksystem nach einem der vorhergehenden Ansprüche 1-7,
**dadurch gekennzeichnet, dass** jedes Netzwerkgerät (2) eine eindeutige Adresse in dem ersten Netzwerkteilnehmer und andere netzwerkgerätebezogene Daten aufweist.

9. Netzwerksystem nach Anspruch 8,
**dadurch gekennzeichnet, dass** die anderen netzwerkgerätebezogenen Daten entweder Gerätetyp und/oder Hardwarestand und/oder Softwarestand und/oder Firmwarestand und/oder den angebotenen Service umfassen.

10. Netzwerksystem nach einem der vorhergehenden Ansprüche 1-9,
**dadurch gekennzeichnet, dass** der Cloud Connector (1) in den ersten Netzwerkteilnehmer einbringbar ist.

11. Netzwerksystem nach einem der vorhergehenden Ansprüche 1-10,
**dadurch gekennzeichnet, dass** der erste Netzwerkteilnehmer als eine Automatisierungsanlage (4) mit einem Automatisierungsnetzwerk (3) ausgestaltet ist.

12. Cloud Connector (1) für ein Netzwerksystem, welcher eine erste Schnittstelle und eine zweite Schnittstelle aufweist, wobei der Cloud Connector (1) mittels der ersten Schnittstelle mit einem ersten Netzwerkteilnehmer mit mehreren Netzwerkgeräten (2) verbindbar ist, wobei die Netzwerkgeräte (2) zur Identifikation Identifikationsparameter aufweisen,
und mittels der zweiten Schnittstelle mit einem zweiten Netzwerkteilnehmer mit einer Cloud-Computing-Infrastruktur verbindbar ist,
**dadurch gekennzeichnet, dass** der Cloud Connector (1) eingerichtet und ausgebildet ist, in einem ersten Schritt einen passiven Scan und einen aktiven Scan des ersten Netzwerkteilnehmers durchzuführen, so dass eine Identifikation von zumindest einem Netzwerkgerät durch den Cloud Connector (1) bewerkstelligbar ist.

13. Cloud Connector (1) nach Anspruch 12,
**dadurch gekennzeichnet, dass** in dem Cloud Connector (1) eine Identifizierungsinformation des Cloud Connectors (1) und eine Identifizierungsinformation des zweiten Netzwerkteilnehmers hinterlegt sind.

14. Cloud Connector (1) für ein Netzwerksystem nach einem der Ansprüche 1-11.

15. Verfahren zum Betreiben eines Netzwerksystems, welches einen ersten Netzwerkteilnehmer mit mehreren Netzwerkgeräten (2), wobei die Netzwerkgeräte (2) zur Identifikation Identifikationsparameter aufweisen, und einen zweiten Netzwerkteilnehmer mit einer Cloud-Computing-Infrastruktur, aufweist, umfassend die Schritte:
• Bereitstellen eines Cloud Connectors (1), welcher eine erste Schnittstelle und eine zweite Schnittstelle aufweist,
• Verbinden der ersten Schnittstelle mit dem ersten Netzwerkteilnehmer und der zweiten Schnittstelle mit dem zweiten Netzwerkteilnehmer,
• Durchführen eines passiven Scans und einen aktiven Scans des ersten Netzwerkteilnehmers durch den Cloud Connector (1) in einem ersten Schritt,
• Durchführen einer Identifikation von zumindest einem Netzwerkgerät (2) durch den Cloud Connector (2).

16. Verfahren nach Anspruch 15,
**dadurch gekennzeichnet, dass** in einem zweiten Schritt die Identifikationsparameter der identifizierten Netzwerkgeräte (2) durch den Cloud Connector (1) erstellt und den einzelnen Netzwerkgeräten (2) zugeordnet werden.

17. Verfahren nach Anspruch 16,
**dadurch gekennzeichnet, dass** zumindest einzelne Identifikationsparameter aus dem zweiten Netzwerkteilnehmer in den Cloud Connector (1) geladenen werden.

18. Verfahren nach Anspruch 16 oder 17,
**dadurch gekennzeichnet**, d a s s, zumindest einzelne Identifikationsparameter vorab in dem Cloud Connector (1) gespeichert werden.

19. Verfahren einem der vorhergehenden Ansprüche 15-18,
**dadurch gekennzeichnet, dass** der Cloud Connector (1) ein Anbindung des ersten Netzwerkteilnehmers an den zweiten Netzwerkteilnehmer vornimmt.

20. Verfahren einem der vorhergehenden Ansprüche 15-19,
**dadurch gekennzeichnet, dass** bei dem passiven Scan der Cloud Connector (1) Übertragungen empfängt, die von zumindest einem Netzwerkgerät (2) initiiert werden.

21. Verfahren einem der vorhergehenden Ansprüche 15-20,
**dadurch gekennzeichnet, dass** bei einem aktiven Scan der Cloud Connector (1) die Netzwerkgeräte (2) aktiv angespricht.

22. Netzwerksystem nach einem der vorhergehenden Ansprüche 15-21,
**dadurch gekennzeichnet, dass** der Cloud Connector (1) in den ersten Netzwerkteilnehmer eingebracht wird.
